**Europäisches Patentamt**

**European Patent Office**

**Office européen des brevets**

(19)

(11) Veröffentlichungsnummer: **0 397 644**

**A1**

## (12) EUROPÄISCHE PATENTANMELDUNG

(21) Anmeldenummer: **90890141.6**

(22) Anmeldetag: **09.05.90**

(51) Int. Cl.5: **B01J 37/00, B01J 37/08**

(30) Priorität: **09.05.89 AT 1101/89**

(43) Veröffentlichungstag der Anmeldung:
**14.11.90 Patentblatt 90/46**

(84) Benannte Vertragsstaaten:
**DE DK FR GB**

(71) Anmelder: **Maschinenfabrik Andritz**
**Actiengesellschaft**
**Statteggerstrasse 18**
**A-8045 Graz-Andritz(AT)**

(72) Erfinder: **Kladnig, Wolfgang Friedrich, Dipl.**
**Ing., Dr.**
**Krottenbachstrasse 106/10/4**
**A-1190 Wien(AT)**
Erfinder: **Krivanec, Heinz, Dr.**
**Geylinggasse 11**
**A-1130 Wien(AT)**

(74) Vertreter: **Köhler-Pavlik, Johann, Dipl.-Ing.**
**Margaretenplatz 5**
**A-1050 Wien(AT)**

(54) **Verfahren zur Herstellung von Katalysatoren.**

(57) Verfahren zur Herstellung von Katalysatoren für Hydrier-Oxidations-, Dehydrier- und Dehydratisierprozesse aus reinen oder gemischten Oxiden von Nickel, Cobalt und Molybdän, Vanadium, Wolfram, Titen und Chrom aus den wässrigen Lösungen der entsprechenden Chloride, Fluoride oder Nitrate, bei dem die Lösungen in eine Pyrohydrolyse-Anlage eingebracht werden, wo die gewünschten Oxide mit spezifischen Oberflächen zwischen 1 und 100 $m^2/g$, Agglomeratgrößen von 1 bis 500 Mikrometern und einer mittleren Teilchengröße zwischen 20 und 30 Mikrometern gebildet werden und sich die Anionen mit Wasserstoff zu den entsprechenden Säuren verbinden. Diese können vorteilhafterweise wieder in den chemischen Löseprozeß rückgeführt werden. Als weiterer Verfahrensschritt kann sich eine Vorreduzierung bei hohen Temperaturen, bis maximal 800° C, anschließen. Die katalytisch wirksamen Substanzen können auch auf Trägermatrizes, wie etwa Aluminiumoxid, Titandioxid, Phosphorpentoxid oder silikatischen Trägern, abgelagert sein. Einfache Weiterverarbeitung zu Formkörpern (Pellets, etc.) ist möglich.

Fig.1

CHLORID-LÖSUNG

Gas

Luft

OXIDE

SÄURE

Die Erfindung betrifft ein Verfahren zur Herstellung von Katalysatoren für den Einsatz bei heterogen katalysierten Reaktionen.

Derartige Katalysatoren werden in der modernen Technik in zahlreichen Verfahren verwendet. Diese umfassen Oxidationsprozesse, Hydrier- oder Dehydrierprozesse, aber auch Reinigungsprozesse mittels der Katalysatoren, etwa die Purifikation von Emissionsgasen.

So werden beispielsweise Nickelkatalysatoren in vielen Prozessen zur katalytischen Hydrobehandlung und zum Wasserstoffaustausch verwendet, wie etwa:

Syn-Gas-Erzeugung aus Naphtha oder gasförmigen Kohlenwasserstoffen,

Oxo-Gas-Reforming (Dampf-Reforming),

Methanisierung,

Hydrobehandlung, Hydroraffinierung,

Hydrodesulfurisierung,

Selektive Hydrierung

Üblicherweise wird Nickel dabei in reiner metallischer Form oder auf Trägermaterialien, meist $Al_2O_3$ ($\alpha$, $\gamma$, $\theta$ -Form), $SiO_2.Al_2O_3$ und anderen Trägern (Tabletten, Raschig-Ringe) oder Zeolithen eingesetzt. Hydrierkatalysatoren enthalten 10 bis 50% NiO. Die Deponierung des NiO erfolgt normalerweise durch Imprägniertechniken (Tränkverfahren), die von anorganischen oder organischen Salzen, wie Nickelnitrat oder -chlorid, oder den entsprechenden Formiaten oder Oxalaten ausgehen. Auch die Copräzipitation von Nickelsalzen zusammen mit Aluminiumsalzen, wie $AlCl_3$ oder $Al(OH)Cl_2$ ist, z.B. aus den amerikanischen Patenten US 3,846.284 (3. Jaffe) und US 3,846.285 (H. Beuther et al.) bekannt.

Die Aufgabe der vorliegenden Erfindung bestand darin, ein Verfahren zu entwickeln, bei welchem die katalytisch aktiven Komponenten, ausgehend von deren wässriger Lösung, gleichsam in idealer Mischung und genau definierter kristallographischer Form und definierten pulvertechnologischen Eigenschaften hergestellt werden.

Die Lösung dieser Aufgabe ist erfindungsgemäß gekennzeichnet durch die Verwendung von reinen Oxiden, Oxidgemischen oder Mischkristallen von Nickel, Cobalt und Molybdän, Vanadium, Chrom, Titan und Wolfram, welche in einer an sich bekannten Pyrohydrolyse-Anlage aus den wässrigen Lösungen der entsprechenden Chloride, Fluoride oder Nitrate hergestellt werden, wobei die ursprünglichen Moleküle dissoziieren, die gewünschten Oxide in Pulverform mit spezifischer Oberfläche zwischen 1 - 100 $m^2/g$ und Agglomeratgrößen von 1 - 500 Mikrometern bei einer mittleren Teilchengröße zwischen 20 und 30 Mikrometern gebildet werden und sich die Anionen der ursprünglichen Moleküle mit Wasserstoff zu den entsprechenden Säuren verbinden.

Aufgrund der kleinen Teilchengröße im Verein mit der sehr großen spezifischen Oberfläche und der überaus homogenen Verteilung der Atome ergeben sich besonders gute katalytische Eigenschaften. Die in der Lösung enthaltenen freien oder aus den Salzen in der Reaktion entstehenden Säuren, wie HCl, $HNO_3$, HF oder Gemische davon werden mittels geeigneter Absorptionsmaßnahmen (adiabatisch oder isotherm arbeitender Absorptionskolonnen, Gaswäscher und dergleichen) wieder in den Löseprozess rückgeführt, womit einerseits eine kontinuierliche Oxidproduktion, andererseits eine 100%ige Säurerückgewinnung gewährleistet ist. Mittels geeigneter Maßnahmen der Gasreinigung (physikal. absorptiv oder chemisch) wird dafür Sorge getragen, daß das aus der Verbrennung entstehende Abgas sowie das verdampfte Wasser schadstofffrei entweichen. Überdies entfällt in Fällen, wo die Anwendung von feinstverteilten Katalysatorpartikeln erforderlich ist, der bei den anderen Verfahren notwendige Schritt des Aufmahlens der Katalysatorsubstanz, was ein wesentlicher Zeit- und Kostenvorteil ist.

Gemäß einem weiteren Merkmal der Erfindung ist vorgesehen, daß Trägermaterialien auf Silikatbasis, z.B. Bentonit oder Aerosil, in den Lösungen, welche die katalytisch aktiven Bestandteile enthalten, vor dem Einsprühen in die Pyrohydrolyse-Anlage suspendiert werden.

Durch Suspendieren der Trägerteilchen in der die katalytisch aktiven Bestandteile enthaltenden Lösung und gemeinsames Sprühösten kann eine Homogenität erzielt werden, wie dies mit keinem anderen bekannten Verfahren möglich ist.

Generell und beispielhaft für die eben ausgeführten Anwendungsbeispiele der mittels des Sprühröstverfahrens herstellbaren Oxide sowie Mischoxide sind solche auf der Basis von Nickel, Cobalt, Molybdän, Vanadium, Wolfram, Titan, Chrom, Aluminium, Phosphor, alleine oder in gemischter Form, oder auch auf inerten Trägern aufgebracht, welche dann auf silikatischer Basis aufgebaut sind, oder Aluminiumoxid als Träger, welches sich aus der Lösung jedoch gemeinsam mit dem oder den übrigen Oxiden pyrohydrolytisch abscheidet.

Für Oxidationsprozesse kommen als katalytisch aktive Substanzen Vanadium, Molybdän, Wolfram oder Titan zur Anwendung. Beispielsweise wird die Reaktion o-Xylol bzw. Naphtalin → Phtalsäureanhydrid durch $V_2O_5/TiO_2$, oder die Ammoxidation 3- oder 4-Methylpiridin + $NH_3$ → 3- oder 4-Zyanopyridin durch $V_2O_5/MoO_3/Al_2O_3$ katalysiert. Katalytisch aktive Substanzen für Hydrierprozesse sind vorwiegend Nickel, Cobalt oder Molybdän. Beispiele dafür sind etwa die aromatische Hydrierung von Benzol zu Cyclohexan mit Nickel als Katalysator oder die Hydrierung von Nitrilen zu Aminen durch Raney-Cobalt. Dehydrier- bzw. Dehydratisierprozesse dagegen werden vorwiegend von Chrom, Eisen oder Aluminium katalysiert, beispielsweise die Umwandlung von Butan in Butadien durch $Cr_2O_3/Al_2O_3$.

Während für viele Anwendungszwecke die aus dem Sprühröstverfahren anfallenden Oxide sich sofort katalytisch einsetzen lassen, wird es in vereinzelten Fällen und je nach Anwendungszweck vonnöten sein, in weiteren Prozeßschritten das Material in die für die Katalyse geeignete Form oder Zustand zu bringen. Diese Prozesse können beinhalten: Aufmahlung, Vermengung mit keramischen Bindern, Extrudierung, Koextrudierung, trockenes Verpressen, Schlickerguß, Reduktion der katalytisch wirksamen Komponente zum Metall oder geeignete Wärmebehandlung zur Einstellung einer geeigneten Kristallmodifikation.

Im folgenden soll die Erfindung mit Bezugnahme auf die beigefügten Figuren anhand zweier Ausführungsbeispiele näher beschrieben werden. Es zeigen

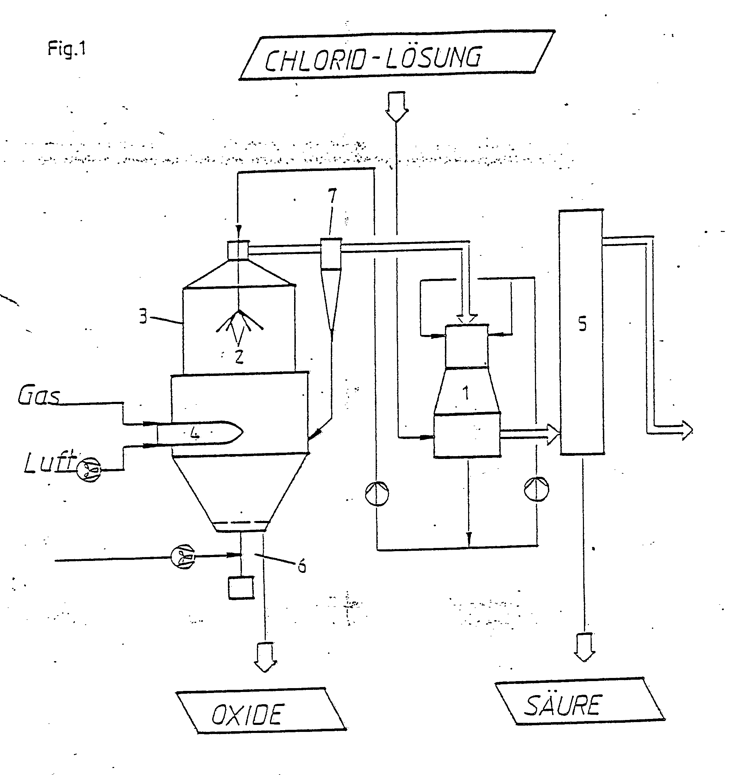

Fig. 1 ein Schema der Anlage für die Pyrohydrolyse,

Fig. 2a eine elektronenmikroskopische Aufnahme von $NiO/NiAl_2O_4$ Agglomeraten und

Fig. 2b eine elektronenmikroskopische Aufnahme von $TiO_2/V_2O_5$-Agglomeraten aus dem Pyrohydrolyse-Prozeß,

Fig. 3 den Verlauf der Reaktionsgeschwindigkeit für einen Hydrierkatalysator nach dem erfindungsgemäßen Herstellungsverfahren für die Testreaktion $CO + 3H_2 \rightarrow CH_4 + H_2O$ nach Vorreduzierung bei $480°C$ ($H_2$, 1 bar) über 72 Stunden und 1 bar Reaktionsdruck (Fig. 3a) bzw. 60 bar Reaktionsdruck (Fig. 3b),

Fig. 4 den Verlauf der Reaktionsgeschwindigkeit für einen Hydrierkatalysator nach dem erfindungsgemäßen Herstellungsverfahren für die schon erwähnte Testreaktion, jedoch nach Vorreduzierung bei $800°C$ ($H_2$, 1 bar) über 4 Stunden, sowie Umsatzgrad und Methanselektivität,

Fig. 5 den Verlauf der Reaktionsgeschwindigkeit für einen herkömmlichen Tränkkatalysator vergleichbarer Zusammensetzung zu den erfindungsgemäßen Katalysatoren und

Fig. 6 den Verlauf der Reaktionsgeschwindigkeit für den Katalysator T 4226, einem der Spitzenprodukte aus einem herkömmlichen Verfahren (Koextrudierung).

Generell lassen sich die pyrohydrolytischen Prozesse folgendermaßen darstellen:

$MeCl_2 + xH_2O \rightarrow MeO + 2 HCl + (x-1) H_2O$

$2 MeCl_3 + xH_2O \rightarrow Me_2O_3 + 6 HCl + (x-3) H_2O$

$2 MeCl_2 + xH_2O + 1/2 O_2 \rightarrow Me_2O_3 + 4 HCl + (x-2) H_2O$

$2 MeCl_3 + xH_2O + 1/2 O_2 \rightarrow 2MeO_2 + 6 HCl + (x-3) H_2O$

$Me (NO_3) + H_2O \rightarrow MeO + 2 HNO_3$

$Me (NO_3)_3 + 3/2 H_2O \rightarrow 1/2 Me_2O_3 + 3 HNO_3$

sowie analog für Fluoride.

Die dabei entstehenden Oxide unterliegen keiner Variation hinsichtlich ihrer chemischen Zusammensetzung, somit können alle nur denkbaren Kombinationen zwischen 1 - 100% zweier oder mehrerer Oxide auf diesem Wege hergestellt werden. Dies ist insbesondere bei der Synthese höherer Alkohole nach dem Prozeß $CO + H_2 \rightarrow$ höhere Alkohole + $H_2O$ von Bedeutung, die von einer Substanz der Formel $CuCoM_{0.8} K_{0.1}$-Oxid (wobei M = Cr, Mn, Fe oder V) katalysiert wird.

Beispielhaft soll nun die Herstellung eines Nikkelkatalysators auf einer Aluminiumoxid-Trägermatrix aus dem Chlorid-System beschrieben werden. Prinzipiell gilt jedoch für alle Materialien wie Cobalt, Molybdän, Vanadium, Titan, etc. sowie alle anderen Systeme, wie etwa das Fluorid- oder Nitrat-System der gleiche Verfahrensablauf.

Die Ausgangslösung für das erfindungsgemäße Verfahren enthält beispielsweise Nickel und Aluminium in Form ihrer Chloride. Sie wird durch eine Vorkonzentriereinrichtung 1 geleitet und anschließend durch Sprühdüsen 2 in den Reaktor 3 eingebracht, was für das resultierende Pulver die erwünschte kleine Abmessung der Partikel und deren große relative Oberfläche zur Folge hat.

Ein, oder mehrere, Gasbrenner 4 erhitzt die versprühte Flüssigkeit und wandelt die Salze in die entsprechenden Metalloxide und die freie Säure um. Die Säure kann in der Absorptionskolonne 5 aus dem Verfahren abgeschieden werden, sie kann in vorteilhafter Weise in den chemischen Prozeß rückgeführt werden. Die erzeugten Oxide werden vom Boden des Reaktors 3 mittels einer vorzugsweise beheizten Förderschnecke 6 aus dem Reaktor entfernt Weiters kann noch ein Staubabscheider 7 zum Abscheiden der mit den Säuredämpfen mitgerissenen Oxide vorgesehen sein.

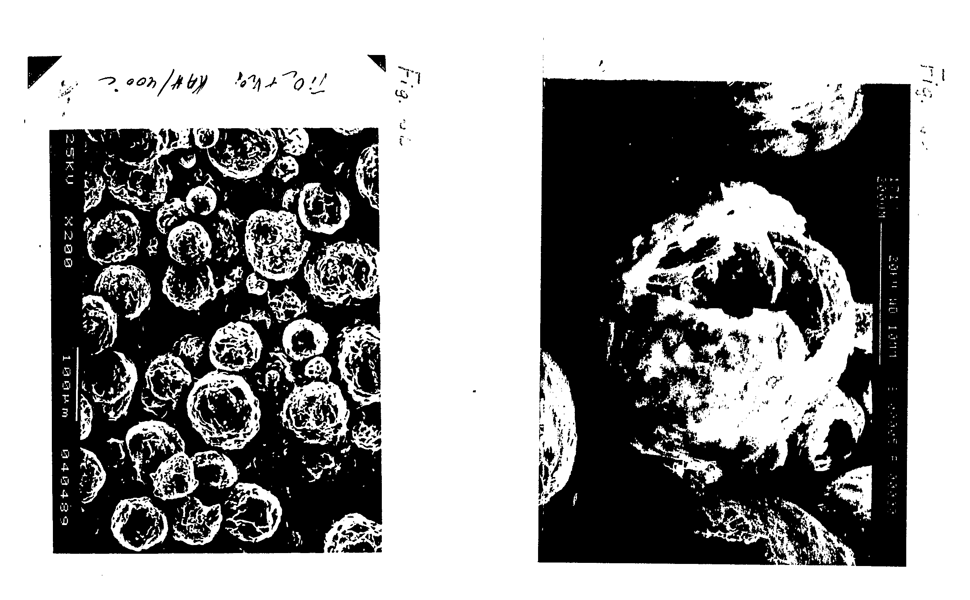

Die durch die Pyrohydrolyse erzeugten Agglomerate haben eine typische hohlkugelartige Form, wie aus Fig.2a ersichtlich ist, die $NiO/NiAl_2O_4$ Agglomerate zeigt. Außerdem sind die aktiven Kationen (Ni) sehr homogen über die Trägermatrix verteilt. Die mittlere Partikelgröße liegt bei 25 Mikrometern bzw. allgemein zwischen 20 und 30 Mikrometern und die Agglomeratgrößen liegen zwischen 1 und 500, meist zwischen 50 und 500 Mikrometern . Diese Agglomerate bestehen aus Primärkristallen von 0.5 bis 1 Mikrometern Größe.

Pulver, die mittels Pyrohydrolyse hergestellt wurden, weisen weiters eine große spezifische Oberfläche auf, die meist im Bereich zwischen 15 und 50 $m^2$/g liegt, in Abhängigkeit von der Reaktionstemperatur, den gelösten Anionen, dem Sprühdruck und der Verweilzeit in der aktiven Zone des Reaktors. Nur in seltenen Fällen werden die unteren Grenzen von etwa 1 m²/g erreicht.

Die maximalen Werte für die spezifische Oberfläche, die mit Nickel erreicht wurden liegen bei 100 m²/g. Das bedeutet neben den Vorteilen für die Eigenschaften als Katalysator auch einen Vorteil für die keramische Weiterverarbeitung, wobei sich diese Pulver unter Zugabe üblicher Zemente und Bindemittel leicht mittels gängiger keramischer Verfahren zu Formkörpern, wie Pellets, Tabletten, Raschig- oder Pall-Ringen usw., verarbeiten lassen.

Um das Katalysator-Gift Chlor bei niedrigen Konzentrationen zu halten, ist es notwendig, Verfahrenstemperaturen von über 700°C einzuhalten. In diesem Bereich bildet Nickel leicht Spinell-Strukturen, die sehr beständig und daher für die Katalyse inaktiv sind. Durch geeignete Vorreduzierung bei Temperaturen von etwa 500°C können diese jedoch geöffnet und das Nickel für die Katalyse verfügbar gemacht werden, wobei keine Abnahme der aktiven Oberfläche eintritt, wenn die Temperatur 800°C nicht überschreitet.

Daher schließt sich gemäß einem weiteren Merkmal der Erfindung der Hyrohydrolyse eine Vorreduzierung im Wasserstoff-Strom bei einem Druck von 1 bar und einer Temperatur zwischen 500°C und maximal 800°C über etwa 4 Stunden der Oxide, Oxidgemische oder Mischkristalle an.

Beispiel 1:

Eine Lösung, enthaltend 167g/l $NiCl_2$ und 209,6 g $AlCl_3$, wurde bei Temperaturen zwischen 850 und 950°C in einer Anlage für die Pyrohydrolyse mit 300 l/h Kapazität verarbeitet.

Das Endprodukt war ein Mischoxid mit 60% NiO (entsprechend 47% Ni) und 40% $Al_2O_3$, das eine spezifische Oberfläche von 29,6 m²/g und eine mittlere Teilchengröße von 22,5 Mikrometer und eine Agglomeratgröße von durchschnittlich 55 Mikrometern aufwies.

Nach einer Vorreduzierung im $H_2$-Strom unter einem Druck von 1 bar und 480°C während 72 Stunden wurde anhand der Testreaktion $CO + 3H_2 \rightarrow CH_4 + H_2O$ die Katalysatorwirkung erprobt.

Die Reaktionsprodukte, hauptsächlich $CH_4$, ebenso wie möglicherweise gebildetes $CO_2$ oder höhere Paraffine, wurden auf analytischem Weg nachgewiesen und durch Gas-Chromatographie gemessen.

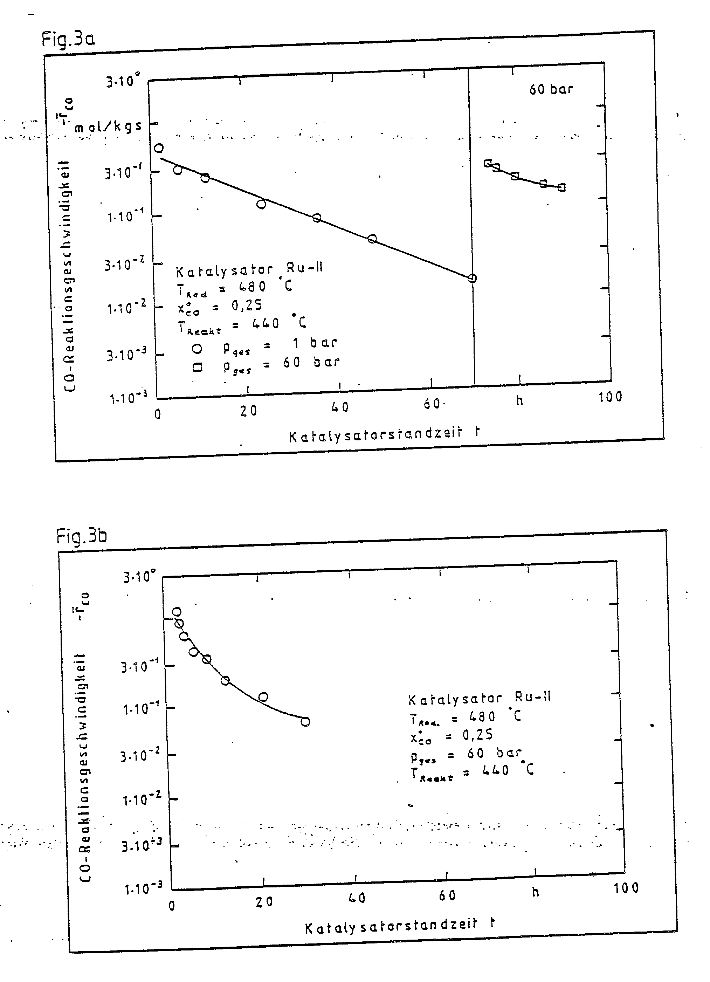

Die Werte für die mittlere Reaktionsgeschwindigkeit sind aus Fig. 3 zu ersehen. Nach einer Vorreduzierung bei 800°C während 4 Stunden unter einem Druck von 1 bar, um die Spinell-Strukturen zu öffnen, ergaben sich die Werte von Fig. 4.

Aus der Auswertung der Probereaktion läßt sich folgern, daß Nickel-Katalysatoren, mittels Pyrohydrolyse hergestellt, die mehr als 33% Nickel enthalten, gute Hydriereigenschaften aufweisen.

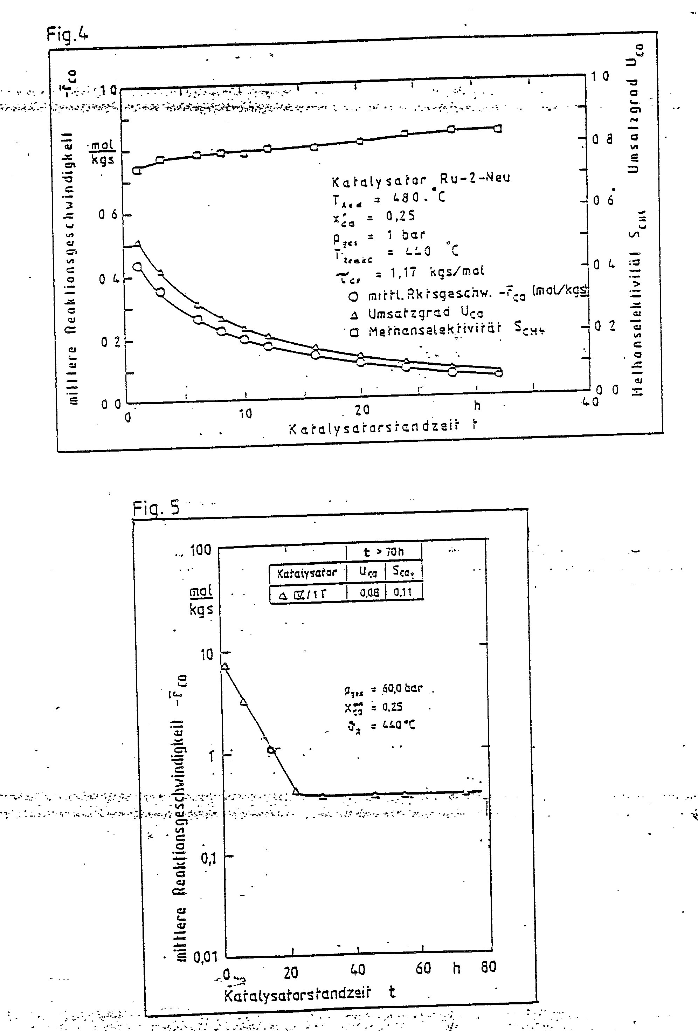

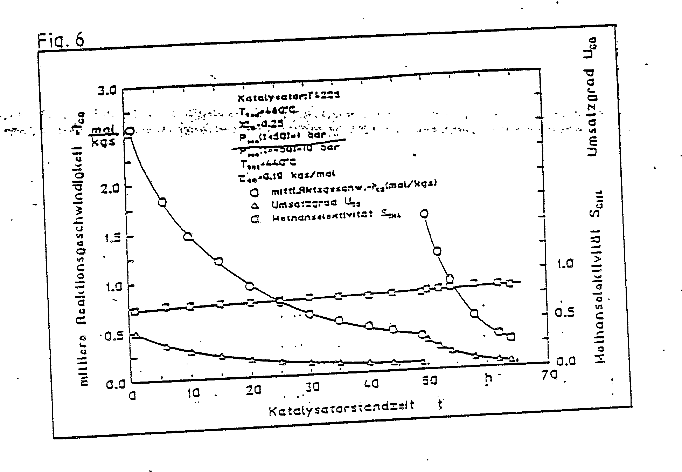

Die katalytische Aktivität eines 60% NiO (47% Ni) enthaltenden Katalysators war mit der eines bekannten industriell genützten Hydrierkatalysators, hergestellt mittels Tränkverfahren, vergleichbar (siehe Fig. 5). Auch im Vergleich mit einem Spitzenprodukt, dem durch Koextrudierung von NiO und $Al_2O_3$ hergestellten T 4226 von Thyssen Gas (siehe Fig. 6 für das Standzeitverhalten bei der Testreaktion), wurden gute Werte erzielt.

Beispiel 2:

Dieses bezieht sich auf die Herstellung eines Oxidationskatalysators, auf Basis des Titanoxids ($TiO_2$) als geeignetes Trägermaterial und des Vanadinpentoxids ($V_2O_5$) als oxidativ wirksame Komponente. Besagter Katalysator wird heute vielfach in Form extrudierter Waben bei der Reinigung belasteter Industrieabgase verwendet (Denoxkatalysator). Für weitere Oxidationsreaktionen in der Grundstoffindustrie, wie der Herstellung von Säureanhydriden aus Paraffinen oder Aromaten, wird ebenfalls $V_2O_5$ alleine oder in Mischform mit $MoO_3$ auf Trägern aus $TiO_2$, $Al_2O_3$ oder $P_2O_5$ verwendet. Besagte Katalysatormischungen alleine oder auf den besagten Trägern können aus wässriger Lösung mittels des Sprühröstverfahrens hergestellt werden. Diese wässrigen Lösungen enthalten dann die geeigneten stöchiometrischen Mischungen von $VCl_2$, ($VCl_3$, $VOCl_2$), $MoCl_5$, oder ($NH_4$)-$VO_3$, oder ($NH_4$)$_2MoO_4$, gemeinsam mit $TiOCl_2$, $AlCl_3$, $H_3PO_4$, oder auch ausgehend aus den entsprechenden Nitraten oder Fluoriden oder deren Mischungen (HF, $HNO_3$).

Beispielhaft wird von einer chlorsauren Lösung ausgegangen, welche aus 372,5 g $TiOCl_2$/l und 61,3 g $NH_4VO_3$/l, sowie 90-100 g freie HCL/l besteht. Diese Lösung kann bei Temperaturen von 500 - 600°C pyrohydrolytisch zersetzt werden, unter Bildung von Mischoxiden aus $TiO_2$ und $V_2O_5$ und der Rückgewinnung der HCl. Das anfallende Oxidpulver besteht aus Agglomeraten von 50 - 100 µm Größe (Figur 2b), sowie aus einer chemischen Zusammensetzung von 80% $TiO_2$ und 20% $V_2O_5$, sowie je nach den Reaktionsbedingungen (Temperatur, Düsenform, Sprühwinkel, Reaktorverweilzeit) mit einer spezifischen Oberfläche von 40 - 60 m²/g. Das besagte Oxidpulver läßt sich leicht mittels keramischer Extrusionsvorgänge in geeignete Form (Ringe, Pellets, Waben) bringen und eignet sich vorzüglich als Oxidationskatalysator (Denox, Paraffinoxidation, Aromatenoxidation). Vanadiumoxid ($V_2O_5$) ist beispielsweise für die Oxidation von $SO_2$ zu $SO_3$ Katalysator, und ein Gemisch $V_2O_5$/$TiO_2$ katalysiert unter anderen die Reaktion o-Xylol $\rightarrow$ Ptalsäureanhydrid.

Die Mischoxidbildung, vornehmlich auf Basis des Chromoxids, alleine oder gemeinsam mit dem Aluminiumoxid oder auch auf Basis des Eisenoxides, wie sie für Katalysatoren für Dehydriervorgänge üblich ist, kann vorteilhaft über die Chloridroute in Analogie zum oben Beschriebenen durchgeführt werden.

Bei anderen Trägermaterialien, wie etwa silikatischen Trägern, z.B. Aluminiumsilikat, Siliziumoxid, Bentonit oder Aerosil, kommt als Variante des erfindungsgemäßen Verfahrens die Suspensionspyrohydrolyse zur Anwendung. Dabei wird eine Suspension des Trägerstoffes in einer Lösung, welche auch die aktiven Anteile enthält, wie etwa einer sauren oder neutralen Nickelchloridlösung oder einer Molybdänchloridlösung, hergestellt und diese in die Pyrohydrolyse-Anlage eingebracht. Dabei wird das aktive Material während der Oxidbildung im Reaktor auf dem inerten Träger deponiert.

Üblicherweise werden aufgrund ihres günstigen Preises und der leichten Verfügbarkeit Chlorid-Lösungen verwendet, jedoch können auch Nitrate und Fluoride mit diesem Verfahren umgewandelt werden.

## Ansprüche

1. Verwendung von reinen Oxiden, Oxidgemischen oder Mischkristallen von Nickel, Cobalt, Molybdän, Vanadium, Chrom, Titan und Wolfram, welche in einer an sich bekannten Pyrohydrolyse-Anlage aus den wässrigen Lösungen der entsprechenden Chloride, Fluoride oder Nitrate hergestellt werden, wobei die ursprünglichen Moleküle dissoziieren, die gewünschten Oxide in Pulverform mit spezifischer Oberfläche zwischen 1 - 100m$^2$/g und Agglomeratgrößen von 1 - 500 Mikrometern bei einer mittleren Teilchengröße zwischen 20 und 30 Mikrometern gebildet werden und sich die Anionen der ursprünglichen Moleküle mit Wasserstoff zu den entsprechenden Säuren verbinden, zur Herstellung von Katalysatoren für den Einsatz bei heterogen katalysierten Reaktionen.

2. Verfahren zur Herstellung von Katalysatoren aus reinen Oxiden, Oxidgemischen oder Mischkristallen von Nickel, Cobalt, Molybdän, Vanadium, Chrom, Titan und Wolfram für den Einsatz bei heterogen katalysierten Reaktionen aus den wässrigen Lösungen der entsprechenden Chloride, Fluoride oder Nitrate durch Einbringen der Lösungen in eine an sich bekannte Pyrohydrolyse-Anlage, wobei die ursprünglichen Moleküle dissoziieren, die gewünschten Oxide in Pulverform mit spezifischer Oberfläche zwischen 1 - 100 m$^2$/g und Agglomeratgrößen von 1 - 500 Mikrometern bei einer mittleren Teilchengröße zwischen 20 und 30 Mikrometern gebildet werden und sich die Anionen der ursprünglichen Moleküle mit Wasserstoff zu den entsprechenden Säuren verbinden, dadurch gekennzeichnet, daß Träger auf Silikatbasis, z.B. Bentonit oder Aerosil, in den Lösungen, welche die katalytisch aktiven Bestandteile enthalten, vor dem Einsprühen in die Pyrohydrolyse-Anlage suspendiert werden.

3. Verfahren nach Anspruch 1 oder 2, dadurch gekennzeichnet, daß nach der Pyrohydrolyse die Oxide, Oxidgemische oder Mischkristalle einer Vorreduzierung im Wasserstoff-Strom bei einem Druck von 1 bar und einer Temperatur zwischen 500°C und 800°C über etwa 4 Stunden unterzogen werden.

4. Katalysatoren, hergestellt nach dem Verfahren nach einem der Ansprüche 1 bis 3, dadurch gekennzeichnet, daß für Oxidationsprozesse die katalytisch aktiven Substanzen Vanadium, Molybdän, Wolfram oder Titan sind.

5. Katalysatoren, hergestellt nach einem der Ansprüche 1 - 3, dadurch gekennzeichnet daß für Hydrierprozesse die katalytisch aktiven Substanzen Nickel, Cobalt oder Molybdän sind.

6. Katalysatoren, hergestellt nach dem Verfahren nach einem der Ansprüche 1 bis 3, dadurch gekennzeichnet, daß für Dehydrier- bzw. Dehydratisierprozesse die katalytisch aktiven Substanzen Chrom, Aluminium oder Eisen sind.

7. Katalysatoren nach einem der Ansprüche 4 bis 6, dadurch gekennzeichnet, daß das katalytisch aktive Oxid aus der Pyrohydrolyse mittels gängiger keramischer Verfahren, wie Extrudierung, Koextrudierung, trockenes Verpressen oder Schlickerguß, unter Zugabe üblicher Zemente und Bindemittel zu Formkörpern, wie beispielsweise Pellets, Raschig- bzw. Pall-Ringe oder Waben, verarbeitet wird.

Fig.1

EP 0 397 644 A1

CHLORID-LÖSUNG

Gas

Luft

OXIDE

SÄURE

Fig.

Fig.

Fig.3a

Fig.3b

Fig.4

Fig. 5

Fig. 6

Fig. 6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | DE-A-3 217 751 (DEGUSSA) <br> * Ansprüche; Seite 3, Zeilen 13-32 * <br> --- | 1-3,5,7 | B 01 J 37/00 <br> B 01 J 37/08 |
| A | DE-C- 870 242 (DEUTSCHE GOLD- UND SILBER SCHEIDEANSTALT) <br> --- | | |
| P,Y | EP-A-0 348 384 (MACHINE FABRIK ANDRITZ) <br> * Ansprüche; Spalte 6, Zeilen 52-55 * <br> --- | 1-3,5,7 | |
| A | GB-A-1 311 757 (SÜD CHEMIE) <br> * Ansprüche * <br> --- | 1-3,5,7 | |
| A | EP-A-0 261 590 (HOECHST) <br> ----- | | |

RECHERCHIERTE SACHGEBIETE (Int. Cl.5)

B 01 J
C 01 B

Der vorliegende Recherchenbericht wurde für alle Patentansprüche erstellt

| Recherchenort | Abschlußdatum der Recherche | Prüfer |
|---|---|---|
| DEN HAAG | 30-08-1990 | THION M.A. |